(19) Europäisches Patentamt

European Patent Office

Office européen des brevets

(11) Numéro de publication : **0 289 438 B1**

(12) **FASCICULE DE BREVET EUROPEEN**

(45) Date de publication du fascicule du brevet :
**15.01.92 Bulletin 92/03**

(21) Numéro de dépôt : **88430008.8**

(22) Date de dépôt : **26.04.88**

(51) Int. Cl.[5] : **F24J 2/24,** F24J 2/48,
F24J 2/34

�Wrap

(54) **Absorbeur-stockeur d'énergie solaire.**

(30) Priorité : **28.04.87 FR 8706012**

(43) Date de publication de la demande :
**02.11.88 Bulletin 88/44**

(45) Mention de la délivrance du brevet :
**15.01.92 Bulletin 92/03**

(84) Etats contractants désignés :
**CH DE ES GR IT LI**

(56) Documents cités :
**DE-A- 3 042 742**
**FR-A- 1 380 490**
**FR-A- 2 430 575**
**FR-A- 2 508 149**
**US-A- 4 203 420**
**US-A- 4 524 757**
**PATENT ABSTRACTS OF JAPAN, vol. 7, no.
145 (M224)[1290], 24 juin 1983; & JP-A-58 55
649 (MATSUSHITA DENKO K.K.) 02-04-1983**
**PATENT ABSTRACTS OF JAPAN, vol. 10, no.
372 (M-544)[2429], 11 décembre 1986; & JP-
A-61 165 551 (YOSHIHIRO YONAHARA) 26-
07-1986**

(73) Titulaire : **GIORDANO S.A.**
**Chemin Saint Bernard Quartier Font de Cine**
**F-06220 Vallauris (FR)**

(72) Inventeur : **Mao, Gérard**
**16 résidence Les Varennes**
**F-01600 Trevoux Massieux (FR)**
Inventeur : **Maurel, Jean**
**4 rue Pigache**
**F-92210 Saint Cloud (FR)**
Inventeur : **Manse, Alain**
**11 rue François Coppel**
**F-78370 Plaisir (FR)**
Inventeur : **Muller, Alain**
**19 rue du Vieux Château**
**F-89340 Francheville de Mas (FR)**

(74) Mandataire : **Hautier, Jean-Louis**
**Cabinet Hautier Office Méditerranéen de
Brevets d'Invention et de Marques 24 rue
Masséna**
**F-06000 Nice (FR)**

Jouve, 18, rue Saint-Denis, 75001 PARIS

**Description**

La présente invention concerne un absorbeur-stockeur souple d'énergie solaire.

Les installations de chauffage d'eau sanitaire par l'énergie solaire comprennent des capteurs solaires, constitués généralement par des panneaux rigides de surface relativement grande, et un réservoir de stockage du fluide caloporteur. Le réservoir et les panneaux sont reliés entre eux par une conduite d'admission, par laquelle le fluide relativement froid prélevé à la base du réservoir est acheminé vers les capteurs, et par une conduite de retour, par laquelle le fluide réchauffé dans les capteurs est ramené au réservoir. Ces installations sont montées à poste fixe sur les lieux où l'on désire produire de l'eau chaude, et elles sont définitivement scellées, puisqu'elles ne sont jamais déplacées. Ceci ne constitue d'ailleurs pas un inconvénient dans le cas du chauffage d'eau destinée à l'alimentation d'appareils sanitaires d'ensembles immobiliers, puisque le besoin en eau chaude y est permanent.

Dans certaines applications particulières, toutefois, on a besoin de disposer d'une source d'eau chaude en des lieux variables, pendant des intervalles de temps relativement courts. C'est ainsi, par exemple, que les agriculteurs doivent fréquemment nettoyer avec un jet d'eau chaude leurs machines et leurs outils pour les débarrasser de la terre qui y adhère, mais il n'est pas toujours possible d'amener les machines à proximité d'une source fixe d'eau chaude. Il n'est pas non plus rentable d'installer en permanence des capteurs solaires en chacun des points d'utilisation, compte tenu de la faible quantité d'eau qui est nécessaire en chacun de ces points.

Pour répondre à ce besoin, il a déjà été proposé, dans la demande de brevet européen n° 0220.971, d'utiliser un capteur-stockeur d'énergie solaire comprenant un réflecteur constitué par une première feuille rectangulaire, en une matière plastique souple, dont l'une des faces est réfléchissante, une seconde feuille en matière plastique souple et transparente, qui est assemblée le long de ses bords longitudinaux à ceux de la feuille réflectrice, au moins un tronçon de tube étanche et enroulable, du type tuyau d'incendie, monté axialement entre les deux feuilles, et des moyens mécaniques de mise en forme, destinée à gonfler l'enveloppe formée par les deux feuilles et à supporter le tube sensiblement le long d'un axe focal de la feuille réflectrice.

Un tel dispositif est aisément transportable, peut être monté rapidement à proximité d'une source d'eau et peut être stocké sous un volume réduit. Les moyens de mise en volume de l'enveloppe formée par les feuilles réflectrices et transparentes majorent toutefois le coût de ce capteur.

L'état de la technique peut être défini par les brevets suivants :

— FR-A-2.508.149 (ZODIAC ESPACE) : ce brevet décrit un capteur-accumulateur solaire à structure souple, comprenant en combinaison, d'une part, une enveloppe souple, et d'autre part, des moyens anti-retour destinés à éviter un courant de convexion lors du refroidissement nocturne.

Dans un mode de réalisation préféré, l'enveloppe souple est constituée par deux feuilles souples écartées l'une de l'autre par des moyens d'entretoisement, une première feuille transparente et une seconde absorbante.

Dans la description détaillée des figures (page 4, lignes 32-37) il est précisé que la paroi de l'enveloppe souple peut être constituée en un tissu imprégné doublé d'un polyuréthane expansé souple, technique couramment utilisée dans la fabrication des embarcations gonflables. Enfin (page 5, lignes 27-30), il est précisé que la face enduite du tissu est en contact avec le fluide contenu dans l'enveloppe.

— JP-A-58-55.649 (MATSUSHITA DENKO K.K.) : ce brevet décrit une nappe collectrice d'énergie solaire, constituée d'une couche interne faite d'une toile ondulée avec des fils croisés en long et en large, et deux feuilles imperméables et souples disposées de chaque côté de cette couche interne.

On a donc un tri-couche, utilisé pour collecter l'énergie solaire, et pouvant être disposé sur toute surface, par exemple sur la surface libre de l'eau d'une piscine.

— US-A-4.524.757 (BUCKLEY) : ce brevet décrit une couverture solaire, pouvant être disposée dans une enceinte de type serre.

— US-A-4.203.420 (SCHOENFELDER) : ce brevet décrit un tube portable solaire, au travers duquel une soufflerie fait circuler de l'air, qui transporte la chaleur collectée au travers de la paroi du tube exposé au rayonnement solaire, de telle sorte que l'on puisse chauffer une installation.

— FR-A-2.430.575 (RHONE POULENC TEXTILE) : ce brevet décrit un capteur solaire textile, par ruissellement de liquide.

— FR-A-1.380.490 (GEORGE ANGUS & Cy) : ce brevet décrit un tuyau d'incendie, qui se compose d'une enveloppe en matière textile tissée et d'un revêtement imperméable, dans son utilisation première.

La présente invention vise à proposer un capteur-stockeur d'énergie solaire d'un type différent, qui puisse, comme dans la demande de brevet européen n° 0220971, être facilement raccordé sur les lieux d'emploi à une canalisation d'eau et être rangé ou transporté sous une forme compacte, mais dont le coût de fabrication soit considérablement réduit.

La combinaison d'une couche externe noire tissée, tressée ou tricotée et d'un film imperméable à l'eau permet de réaliser une enceinte souple de faible épaisseur (permettant ainsi le bon transfert de la chaleur à l'eau à réchauffer) et résistant néanmoins à des pressions élevées, de l'ordre de quinze bars, et à des températures également élevées, pouvant atteindre 110 degrés Celsius.

Le diamètre de l'ensemble tubulaire ainsi constitué est variable suivant les utilisations du capteur-stockeur et peut atteindre 300 millimètres ou plus. La longueur est également variable et peut atteindre plusieurs dizaines de mètres.

Avantageusement, la couche extérieure sera réalisée de façon à être absorbante et semi-sélective et à résister aux effets de vieillissement provoqués par le rayonnement solaire.

La couche extérieure pourra être en polyester ou similaire (nylon, mylar, marques déposées), tandis que le film imperméable qui la gaîne pourra être en une matière thermo-plastique et/ou élastomèrique, par exemple en éthylène propylène diène monomère, ou encore un matériau commercialisé sous l'appellation Paybax (marque déposée), par la société ATOCHEM. Le film imperméable peut ou non adhérer à la couche externe.

Les raccords d'extrémité seront du type dit à montage rapide en deux parties, l'une mâle et l'autre femelle, dont l'une est solidaire de l'enceinte tubulaire et l'autre du conduit associé d'alimentation ou d'évacuation. Ces raccords peuvent être en une matière plastique moulée, par exemple en polypropylène, chargée de fibres de verre.

Cette enceinte tubulaire souple pourra être disposée de façon rectiligne ou être repliée en serpentin ou en U couché dans un plan vertical ou incliné, avec une (ou des) branches(s) supérieure(s), où la température sera plus élevée, raccordée à la canalisation d'évacuation d'eau chaude, et une (ou des) branches(s) inférieur(s), où la température sera plus basse, raccordée à la canalisation d'admission d'eau froide.

Plusieurs enceintes pourront être raccordées entre elles, pour accroître le volume d'eau disponible.

La ou les enceintes sont logées dans un caisson protecteur, dont une partie au moins sera réalisée en un matériau transparent, avec un calorifugeage d'au moins une partie desdits caissons, et une disposition plus ou moins serrée des différentes branches de cette ou ces enceintes dans ledit caisson.

La ou les enceintes pourront être disposées et raccordées bout à bout et/ou en parallèle dans des goulottes modulaires servant de support.

Le capteur-stockeur conforme à l'invention s'applique notamment à la réalisation :

— de chauffe-eau solaires sans source auxiliaire de chaleur, en usage actuellement dans certains pays à fort ensoleillement ;

— de chauffe-eau d'été, pour les résidences de vacances, les résidences mobiles, la navigation de plaisance, etc. ;

— de dispositifs assurant l'alimentation en eau chaude sanitaire des résidences principales, en isolant une partie de cet absorbeur comme réserve d'eau chaude et en couplant ce chauffe-eau avec une source d'énergie électrique ;

— de système de préchauffage de l'eau pour les chauffe-eau à gaz modulés en température que l'on utilise dans certains pays ;

— de dispositifs de production d'eau chaude sanitaire de camping et de piscines ;

— de moyens de préchauffage de l'eau chaude sanitaire des hôtels.

Il convient de noter que le montage très simplifié de ce capteur-stockeur et son volume réduit en pièces détachées (l'absorbeur vide est plat) permettent la réalisation de chauffe-eau montables directement par les utilisateurs, ce qui réduit de façon appréciable les coûts d'installation.

Le dispositif pour le captage et le stockage d'énergie solaire est du type comprenant au moins une enceinte tubulaire souple, constituée essentiellement d'au moins une couche externe noire en fibres de matière plastique tissées, tressées ou tricotées, destinée à absorber l'énergie solaire et à résister à des pressions intérieures voisines de celles des réseaux d'eau, gainée intérieurement d'un film en un matériau imperméable à l'eau, destiné à assurer l'étanchéité, ladite enceinte étant équipée à chacune de ses extrémités de moyens de raccordement à une conduite d'admission d'eau froide pouvant être reliée au réseau d'eau et à une conduite d'évacuation d'eau chaude.

Cette enceinte tubulaire souple est logée dans un coffrage calorifugé qui présente sur sa face tournée vers le soleil une partie transparente, destinée à assurer un effet de serre.

La face tournée vers le soleil dudit coffrage est réalisée en deux parties, une partie supérieure isolante et une partie inférieure transparente, de telle sorte que la zone supérieure assure la conservation de l'eau chaude dans le capteur.

L'enceinte tubulaire souple peut être repliée en plusieurs branches en serpentin ou en U couché.

Le capteur-stockeur peut comprendre plusieurs enceintes tubulaires souples raccordées en série.

Les enceintes tubulaires souples peuvent être raccordées en parallèle à des collecteurs.

L'enceinte tubulaire souple peut avoir un diamètre interne égal ou supérieur à sept centimètres, de telle sorte que la capacité de stockage soit voisine ou supérieure à 50 litres/m$^2$.

Les dessins schématiques annexés illustrent diverses formes de mise en oeuvre de l'invention. Sur ces dessins :

La figure 1 est une coupe partielle d'une enceinte souple conforme à l'invention ;

La figure 2 illustre la forme d'utilisation la plus simple de cette enceinte souple, par raccordement à une conduite d'amenée d'eau froide et une conduite d'évacuation d'eau chaude et exposition directe au soleil;

La figure 3 est une vue en élévation d'une enceinte souple selon l'invention disposée dans un caisson incliné ;

La figure 4 est une coupe suivant la ligne IV-IV de la figure 3 ;

La figure 5 illustre le raccordement en série de deux enceintes souples disposées dans des goulottes ;

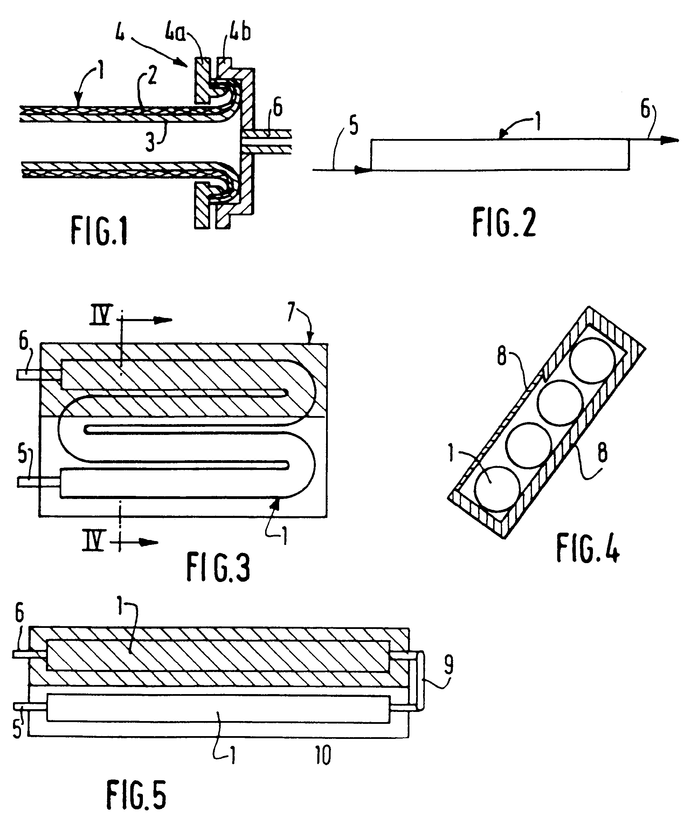

L'enceinte tubulaire souple 1 représentée sur la figure 1 comprend une couche externe noire 2, en fibres de matière plastique tissées, tressées ou tricotées, doublée intérieurement, par un film 3 en un matériau imperméable à l'eau. Le film 2 peut adhérer ou non à la couche 1. Aux deux extrémités de cette enceinte tubulaire souple est fixé un raccord 4, du type dit à montage rapide, permettant de brancher rapidement sur les lieux d'utilisation ou de démonter une conduite d'amenée 5 d'eau froide (voir figure 2) et une conduite d'évacuation d'eau chaude 6. Ce raccord 4 est constitué typiquement de deux parties mâle et femelle 4a, 4b, qui s'emboîtent l'une dans l'autre, avec les deux fractions (couche et film) de l'enceinte.

L'étanchéité est réalisée par un double écrasement du film entre deux parois lisses alors que la résistance à l'arrachement est assurée par un double cisaillement de la couche externe.

La figure 2 montre un mode d'emploi simple de l'enceinte tubulaire 1, qui est exposée directement au soleil et disposée longitudinalement.

L'enceinte souple 1 peut également être enroulée en serpentin, comme on le voit sur la figure 3, où elle est logée dans un coffrage 7 en un matériau thermiquement isolant, qui est incliné sur la verticale et présente, sur sa face tournée vers le soleil, une ouverture recouverte d'une feuille 8 de matière plastique transparente ou par une plaque de verre. Un tel caisson fait ainsi effet de serre pour le capteur-stockeur.

Selon une variante de l'invention, la partie supérieure de ce caisson peut être isolée de façon à mieux conserver, pendant les périodes non ensoleillées, la fraction la plus chaude de l'eau, alors que la partie inférieure du caisson est rendue transparente, de façon à capter l'énergie solaire.

L'homme de l'art sera à même, selon les régions, l'ensoleillement moyen au sol, et l'écart des températures diurne et nocturne, de choisir un rapport favorable entre la partie supérieure isolée et la partie inférieure transparente ; avantageusement, la demanderesse a constaté qu'un rapport et demi entre respectivement la partie supérieure et la partie inférieure, assurait un optimum pour un climat tempéré comme celui de la France métropolitaine. C'est ce qu'illustre la figure 4, qui est une vue en coupe selon la ligne IV-IV de la figure 3.

Selon une deuxième variante de l'invention, les branches supérieures de l'enceinte disposées dans une zone isolée du caisson peuvent être serrées voire jointives, alors que les branches inférieures de l'enceinte peuvent être disposées de façon plus espacée, notamment si la face inférieure du caisson est réflectrice. D'une manière analogue, le diamètre des branches de l'enceinte disposées en la partie inférieure du caisson peut être inférieur à celui de la (ou des) branches(s) supérieures(s) (car la surface captatrice varie comme le diamètre de l'enceinte, alors que le volume d'eau varie comme le carré de ce même diamètre).

Comme on le voit sur la figure 5, plusieurs enceintes 1 peuvent être connectées en série par des conduites de raccordement telles que 9, afin d'accroître la capacité du capteur-stockeur. Les enceintes 1 peuvent être disposées dans des goulottes parallèles, éventuellement à fond réfléchissant, et être surmontées d'une feuille 10 de matière plastique transparente, ou par une plaque de verre, faisant office de serre.

Exemples de réalisation :

## EXEMPLE 1

La demanderesse a réalisé un absorbeur-stockeur souple individuel, à partir d'une enceinte (12 mètres de long ; diamètre = 110 mm) repliée en serpentin jointif dans un caisson isolé recouvert d'un vitrage.

L'enceinte était composée d'une couche externe en un tissu de fibres de polyester chargées de carbone dans la masse (fibres présentant un titre de 560 tex (g/Km)) et d'un film interne, sous la forme d'un élastomère thermoplastique à séquence polyamide-polyéther chargé avec environ 2% de carbone (Paybax (marque déposée) 40 D noir). Le film était rendu solidaire de la couche, car collé par une colle réactivable à chaud (en anglais: "hot-melt").

Cette enceinte présentait les propriétés opto-électroniques suivantes :

$\alpha = 95\%$      $\varepsilon = 65\%$

Avec un ensoleillement moyen de 800 W/m2, la température d'eau moyenne stockée était de 75 degrés Celsius.

EXEMPLE 2

La demanderesse a réalisé un autre absorbeur-stockeur à partir d'une enceinte composée d'un film non solidaire de la couche externe.

Alors que la couche externe était réalisée avec le même matériau que dans l'exemple précédent, le film était en un élastomère de type thermoplastique, le Santoprène (marque déposée), commercialisé par la firme MONSANTO. A noter que les deux extrémités de la couche externe étaient enduites d'un plastisol, puis gélifiées, afin d'assurer en extrémité une bonne cohésion des fibres entre elles.

La partie supérieure du caisson, contenant l'eau la plus chaude, était isolée de façon à éviter les pertes nocturnes, sur une fraction appréciable de sa longueur (environ 1/3).

La productivité annuelle à Nice est ainsi passée à 556 kWb/an avec ce masquage partiel (pour 464 kWb/an sans masquage).

Les modes d'utilisation qui viennent d'être décrits, du capteur-stockeur conforme à l'invention, ne visent, bien entendu, qu'à illustrer diverses applications de celui-ci, en soulignant sa simplicité, sa facilité de montage et de démontage et son faible encombrement. On notera, en particulier, que l'enceinte tubulaire vide peut être aplatie en vue de son stockage.

**Revendications**

1. Dispositif pour le captage et le stockage d'énergie solaire, du type comprenant au moins une enceinte tubulaire souple (1), constituée essentiellement d'au moins une couche externe noire (2) en fibres de matière plastique tissées, tressées ou tricotées, destinée à absorber l'énergie solaire et à résister à des pressions intérieures voisines de celles des réseaux d'eau, gainée intérieurement d'un film (3) en un matériau imperméable à l'eau, destiné à assurer l'étanchéité, ladite enceinte étant équipée à chacune de ses extrémités de moyens de raccordement (4) à une conduite d'admission d'eau froide pouvant être reliée au réseau d'eau et à une conduite d'évacuation d'eau chaude caractérisé en ce que ladite enceinte tubulaire (1) est logée dans un coffrage (7), calorifugé, qui présente sur sa face tournée vers le soleil une partie transparente, destinée à assurer un effet de serre et que la face tournée vers le soleil dudit coffrage (7) est réalisée en deux parties, une partie supérieure isolante et une partie inférieure transparente, de telle sorte que la zone supérieure assure la conservation de l'eau chaude dans le capteur.

2. Capteur-stockeur selon la revendication 1 caractérisé en ce que ladite enceinte tubulaire souple (1) est repliée en plusieurs branches en serpentin ou en U couché.

3. Capteur-stockeur selon la revendication 1 caractérisé en ce qu'il comprend plusieurs enceintes tubulaires souples (1) raccordées en série.

4. Capteur-stockeur selon la revendication 3, caractérisé en ce que les enceintes tubulaires souples (1) sont raccordées en parallèle à des collecteurs.

5. Capteur-stockeur selon la revendication 1, caractérisé en ce que l'enceinte tubulaire souple a un diamètre interne égal ou supérieur à sept centimètres, de telle sorte que la capacité de stockage soit voisine ou supérieure à 50 litres/m2.

**Patentansprüche**

1. Vorrichtung zum Aufnehmen und Speichern von Solarenergie, vom Typ mit wenigstens einem rohrförmigen biegsamen Raum (1), der im wesentlichen aus wenigstens einer äußeren schwarzen Schicht (2) aus gewebten, geflochtenen oder gestrickten Kunststoffasern gebildet wird, die dazu dient, die Solarenergie zu absorbieren und inneren Drücken zu widerstehen in der Nähe von jenen des Wassernetzes, im Inneren mit einem Film (3) aus wasserundurchlässigem Material ummantelt, das dazu dient, die Dichtheit sicherzustellen, wobei der Raum an jedem seiner Enden mit Verbindungseinrichtungen (4) mit einem Zuführrohr von kühlem Wasser versehen ist, das mit einer Wasserversorgung und einer Ausbringleitung von heißem Wasser verbindbar ist, **dadurch gekennzeichnet**, daß der rohrförmige Raum (1) in einem wärmegedämmten Behälter (7) aufgenommen ist, der an seiner der Sonne zugewandten Seite einen durchsichtiger Bereich aufweist, der dazu dient, einen Gewächshauseffekt sicherzustellen, und daß die der Sonne zugewandte Seite des Behälters (7) aus zwei Bereichen gebildet wird, einem oberen isolierenden Bereich und einem unteren durchsichtigen Bereich derart, daß die obere Zone das Beibehalten des warmen Wassers in dem Aufnehmer sicherstellt.

2. Speicher-Aufnehmer nach Anspruch 1, **dadurch gekennzeichnet**, daß der biegsame rohrförmige Raum (1) in mehreren Ästen übereinander gefaltet ist in Serpentinenform oder in umgelegter U-Form.

3. Speicher-Aufnehmer nach Anspruch 1, **dadurch gekennzeichnet**, daß er mehrere biegsame rohrförmige Räume (1) aufweist, die in Reihe verbunden sind.

4. Speicher-Aufnehmer nach Anspruch 3, **dadurch gekennzeichnet**, daß die biegsamen rohrförmigen Räume (1) parallel mit Kollektoren verbunden sind.

5. Speicher-Aufnehmer nach Anspruch 1, **dadurch gekennzeichnet**, daß der biegsame rohrförmige Raum einen inneren Durchmesser aufweist, der gleich oder größer ist als 7 cm, derart, daß die Speicherkapazität in der Nähe oder größer ist als 50 Liter/m$^2$.

## Claims

1. A device for absorbing and storing solar energy, of the type comprising at least one tubular supple space (1) substantially formed of at least one outer black layer (2) of woven, tressed or knitted synthetic fibers serving the purpose of absorbing solar energy and of resisting interior pressures in the vicinity of those of the water nets, internally sheathed with a film (3) of a water-impermeable material to ensure tightness, at each of its ends the space being provided with connecting means (4) having a conduit for the supply of cool water, apt to be connected to the water net and to a hot water discharge conduit, **characterized** in that the tubular space (1) is received in a heat-insulated container (7) having a transparent part on its side facing the sun to ensure a green-house effect, and in that the side of the container (7) facing the sun is formed of two parts, an upper insulating part and a lower transparent part, such that the upper part ensures maintaining of the warm water in the receiving means.

2. The receiving/storage means according to claim 1, characterized in that the supple tubular space (1) is superposed in several branches by folding back in the form of serpentines or of a lying U.

3. The receiving/storage means according to claim 1, characterized in that it comprises a plurality of supple tubular spaces (1) connected in series.

4. The receiving/storge means according to claim 3, characterized in that the supple tubular spaces (1) are connected in parallel with collectors.

5. The receiving/storage means according to claim 1, characterized in that the supple tubular space has an internal diameter equal or greater than 7 cm, such that the storage capacity is close to or greater 50 liters/m$^2$.

FIG.1

FIG.2

FIG.3

FIG.4

FIG.5